# EUROPEAN PATENT SPECIFICATION

(11) **EP 4 070 974 B1**
(45) Date of publication and mention of the grant of the patent: **06.11.2024**
(21) Application number: 22166850.2
(22) Date of filing: 05.04.2022
(51) Int. Cl.: B60G 15/12, F16F 9/06, F16F 9/342, F16F 9/48

(54) **SHOCK ABSORBER FOR WHEELED VEHICLES**
STOSSDÄMPFER FÜR RADFAHRZEUGE
AMORTISSEUR POUR VÉHICULES À ROUES

(30) Priority: 06.04.2021 IT 202100008516
(43) Date of publication of application: 12.10.2022
(73) Proprietor: Umbria Kinetics SRL, 06034 Foligno (PG) (IT)
(72) Inventor: Giuliani, Federico, I-06034 Foligno (IT)
(74) Representative: Ercolani, Simone Pietro

(56) References cited:
- EP-A2- 1 111 266
- WO-A1-2020/016916
- WO-A1-93/05971
- CN-A- 108 775 368
- US-B2- 7 753 179
- US-B2- 8 899 560

## Description

### FIELD OF THE INVENTION

The present invention concerns a shock absorber for wheeled vehicles.

In particular, the present invention is used in the automotive or motorcycle industry.

The solution also concerns a shock absorber used for the seat of a vehicle also devoid of wheels, for example of a ship or boat.

### KNOWN PRIOR ART

In fact, in such field, shock absorbers for vehicles, which comprise a fluidic damper constrained between the wheel and the frame of the vehicle and which fluidic damper is equipped with a cylinder and a piston sliding within said cylinder, and an elastic element, such as a coil spring combinable with said fluidic damper in coaxial position with respect to the latter, for transmitting the loads between the wheel and the frame depending on the relative movement between the piston and the cylinder, are known.

As is also known, the shock absorbers of a vehicle must be able to fulfill different functions such as, in particular, that of absorbing the bumps of the ground, limiting side displacements of the vehicle and distributing the loads uniformly on the wheels.

In this regard, both the elastic behavior (the one depending on the relative position between said piston and said cylinder) and the damping (the force depending on the speed of relative displacement between said piston and said cylinder, mainly produced by the friction of a fluid passing through appropriate ports) have a crucial role as they are responsible for the transferring of the loads between the wheel and the frame of the vehicle, so as to thus ensure greater comfort to the passengers. When designing shock absorbers, it is thus advantageous to have systems that are able to provide the appropriate loads produced by the elastic part and by the damping systems, as well as appropriate adjustment systems that are compatible with the volumes available for their housing.

For example, it is known that the maximum force produced by a hydraulic damper during the compression step is limited by the maximum pressure difference between the two faces of said piston. Moreover, it is necessary to form a third chamber to make the excess oil produced by the introduction and extraction of the rod flow/pour out.

Both needs can be met by pressurizing the entire system through the use of a separator piston placed inside said cylinder, at an end of which a third chamber containing compressible pressurized gas is placed. However, the presence of this separator piston reduces the available stroke of said piston with the same maximum length of the system. Moreover, the gas preload necessarily involves a worsening of the comfort. A known solution is the use of a tray outside of the cylinder and of a valve at the entry of such tray, which increases the load losses and thus raises the pressure on a face of the piston.

Moreover, the sizing and adjustment of the elastic element is one of the main requirements in the design of the shock absorbers, however taking into account the fact that the elastic modulus of the coil springs is almost constant and thus unable to cover all the contrasting needs of the different types of cars. In fact, in order to absorb wide travel and minimize the loads transmitted, it is convenient to have a not too high spring modulus, however this involves a high roll when cornering; on the contrary, whenever, by necessity, excessive rolling of the car must be avoided, the spring must be sized with a high spring modulus. Thus, sports cars not provided with active shock absorbers generally have very rigid shock absorbers with small travels, while city cars have softer shock absorbers with high roll.

In order to try to find a compromise between the aforementioned contrasting needs of comfort and roll reduction, means have been brought in to vary the load transmission law of the elastic element as the relative position of said piston and said cylinder of the damper varies. This way, it is possible to achieve a progressive trend of the spring modulus so as to have, initially, a low coefficient for absorbing little bumps of the ground and a higher coefficient, with higher travels, for limiting the roll. This can be made in various ways: by operating on the geometry of the suspension arms with which the shock absorbers are combined, by using a non-linear elastic element, such as, for example, with air, or by using coil springs in series having different elastic moduli. Unfortunately, all the solutions mentioned above are not without drawbacks. In fact, the solution relating to the geometry of the suspension arms is indeed reliable, but rather costly and unable to allow a dynamic adjustment of the suspension itself and, thus, of the shock absorbers. On the contrary, the use of non-linear elastic elements provides a considerable versatility, since the feature of an air spring can be adjusted by changing the pressure, however, it is a considerably complex solution, for the way it is implemented nowadays. The combination of coil springs in series, of which one much softer than the other and with limited travel, allows a force-displacement characteristic curve split in two parts. A first, low coefficient part when the two springs work in series, and a second, more rigid part starting at the end of the stroke of the softer spring, generally called "tender-spring". This system provides a passive control of the spring modulus in function of the position, with a curve following the progressiveness of the air spring but with the reliability of a coil spring. The price to pay for this system is still the scarce versatility and ability to adapt, since it is necessary to replace one or more springs to change the feature of the shock absorbers. Moreover, with such solution, it is very complicated to change the vehicle ground clearance without replacing one or more of the elastic elements.

There are solutions that provide for the use of a gas spring placed in series with the main spring of the shock absorber itself.

For example, the patent EP2903840B1 in the name of Giuliani et Alii describes a shock absorber for wheeled vehicles that comprises a fluidic damper constrained between a wheel and the frame of the vehicle and equipped with a cylinder and a piston sliding within the cylinder, a coil spring combinable with the fluidic damper for transmitting the loads between said wheel and the frame as the position between the piston and the cylinder varies, and means for varying the load transmission law of the coil spring according to the variation of the position between the piston and the cylinder. Advantageously, the means for varying the load transmission law comprise a gas spring functionally combined in series with the elastic element and acting for at least part of the stroke of the piston with respect to the cylinder. Essentially, according to such solution, the shock absorber comprises an elastic element, or main spring, of the coil spring type, preferably with a high, but nonetheless constant and predetermined, spring modulus functionally placed in series with an air spring, preferably with a smaller travel than that of the elastic element and anyhow provided with variable spring modulus in function of the relative displacement of the piston and cylinder of the fluidic damper, and also depending on the volume and initial pressure of the same gas spring. In practice, the variation means for varying the load transmission law of the elastic element allow to vary the overall spring modulus K of the shock absorber, so as to sum up to the inverse of the spring modulus of the coil spring, i.e. 1/k1, the contribution of the inverse of the spring modulus k2 given by the gas spring, whose value varies according to the position of the piston with respect to the cylinder of the damper. Ultimately, the overall spring modulus K of the shock absorber is given by the coil spring and gas spring contributions, mathematically obtainable by the sum of the inverse of the constant spring modulus k1 of the coil spring and of the inverse of the variable spring modulus k2 of the gas spring, i.e. K=1/k1+1/k2. The spring modulus k2, represented by a curve varying in function of the displacement of the piston with respect to the cylinder of the damper, also depends on the volume (Vo) and initial pressure (Po), as well as on a surface of reference inside the gas spring itself. Such spring modulus is instead fully independent of the geometry of the fluidic damper.

This shock absorber is as versatile as a shock absorber having a single air spring, since it is possible to obtain an unlimited range of characteristic curves of load transmission without replacing any part by varying the pressure and volume of air contained in said gas spring.

However, a solution of this type is not without drawbacks. In fact, although such solution allows to modify the balance of the vehicle at will and quickly by simply adjusting the gas pressure inside the gas spring, nevertheless it is still extremely voluminous.

The patent CN108775368 in the name of Shandong Wantong Hydraulic Co Ltd, which concerns the technical field of oil-gas springs, in particular an oil-gas spring adjustable in stiffness with dual oil chamber, is known and discloses a shock absorber according to the preamble of claim 1.

The patent US7753179 in the name of Roberston Suspension systems PTY Ltd concerns suspensions and/or suspension systems particularly adapted, but not exclusively, for being used with vehicles or the like, including suspension units and/or suspension systems for vehicles traveling on paved roads and suspension systems for vehicles traveling off-road, such as for example off-road vehicles, and for road racing vehicles including motorcycles, military vehicles, vehicles used in the mining industries, in particular for transporting mineral materials and the like. The suspension system is also adapted for being used in industrial applications, such as, for example, for industrial switch applications, suspension systems for seats, in particular seats of vehicles, suspensions of truck cabins or the like.

The document US8899560 in the name of Allen Mark et Alii generally concerns shock absorbers for vehicles, and more in particular an adjustable shock absorber that doesn't require a spring for supporting a vehicle.

The documents DE 10 2019 211 502 A1, WO 2020/016916 A1 and WO 93/05971 A1 disclose further examples of known shock absorbers.

Thus, object of the present invention is to implement a shock absorber that, as an alternative to the other systems mentioned above, is able to simultaneously ensure a high comfort and a limited roll of the car under all moving conditions of the car and on all types of roads faced by the car itself in a nevertheless compact form.

Further object is to implement a shock absorber that is simple, reliable and provided with greater versatility with respect to the shock absorbers of the known art, which are provided with known variation means for varying the load transmission law of the elastic element.

Another object of the invention is to implement a shock absorber that uses a hydraulic damper which, unlike those of the known art, allows to reduce volumes and production costs while maintaining high ability to produce damping loads and adjustability in elongation and compression. Moreover, further object is to implement a geometry of the damper that separates the structural elements from the main piston, whose only purpose is to be able to better adjust the hydraulic flows and to produce it of a non-structural material.

Finally, object of the present invention is to reduce the outer volumes and simultaneously adjust the reduction ratio between the elastic thrust of the spring and the thrust produced on the wheel.

Finally, object of the present invention is also to make the seating of the user of a vehicle, in particular of a ship, more comfortable.

### SUMMARY OF THE INVENTION

These and further objects are obtained by the present shock absorber for wheeled vehicle, comprising at least one fluidic damper constrained between at least one wheel and the frame of said vehicle and equipped with a cylinder and a piston sliding within said cylinder, and at least one gas spring functionally combined with said at least one fluidic damper and acting for at least part of the stroke of said piston with respect to said cylinder, wherein said cylinder comprises a first chamber and a second chamber and that said piston slides within said cylinder thus varying the dimensions of said first chamber and said second chamber, said fluidic damper comprising a rod integrally combined with said piston and adapted to make said piston slide inside said cylinder, characterized in that said rod is equipped with a housing inside which said at least one gas spring is housed, and in that said gas spring is functionally combined with said at least one second chamber and/or said at least one first chamber of said cylinder. Clearly, such solution considerably reduces the volumes of the current shock absorbers of the type comprising a gas spring and a fluidic damper. In fact, normally, the gas spring is arranged outside the fluidic damper, whereas with the solution object of the invention, the gas spring is inside the rod of the damper, thus resulting compact and creating less volume with respect to the solutions of the known art.

Moreover, the hollow rod constitutes, according to the invention, a housing for elastic elements, such as coil springs, elastomers and gas springs. The advantage of housing the elastic elements inside the hollow rod is twofold: reduction of the outer volumes and possibility to adjust the reduction ratio between the elastic thrust of the spring and the thrust produced on the wheel by appropriately sizing the ducts.

According to the invention, said at least one gas spring comprises at least one third chamber and at least one fourth chamber, wherein said at least one third chamber contains a gas, preferably air, and wherein said at least one third chamber and said at least one fourth chamber are separated from each other, directly or indirectly, by at least one sliding or deformable dividing wall. Said at least one fourth chamber is in fluidic communication with said at least one first chamber and said at least one second chamber by means of a transfer duct.

According to the invention, said at least one fourth chamber and said at least one second chamber contain an incompressible fluid transferable between said at least one second chamber and said at least one fourth chamber, and vice versa, as the position of said piston varies with respect to said cylinder; said at least one dividing wall is further sliding or deformable depending on the volume of incompressible fluid transferred from said at least one second chamber to said at least one fourth chamber, and vice versa, so as to vary the volume of said third chamber and said fourth chamber.

Furthermore, said housing of said rod comprises said at least one third chamber, said at least one fourth chamber and said dividing wall.

The shock absorber further advantageously comprises one or more fluid transfer ducts, in particular for incompressible liquid, made at least in part within said rod and/or said piston and/or said cylinder to functionally connect said gas spring to said at least one second chamber and/or said at least one first chamber of said cylinder, preferably said one or more fluid connections connect said at least one fourth chamber of said gas spring to said at least one second chamber and/or to said at least one first chamber of said cylinder.

Moreover, said shock absorber comprises, according to the invention, first adjustment means to adjust the pressure of said gas inside said at least one third chamber.

Furthermore, according to the invention, said housing comprises a hole formed within said rod.

Always according to the invention, said gas spring comprises a fifth chamber and at least one second dividing wall to separate said at least one third chamber from said at least one fifth chamber, wherein said second dividing wall is sliding or deformable, so as to vary the volume of said third chamber and said fifth chamber, and wherein said fifth chamber and said second dividing wall are also arranged within said housing hole. According to the invention, said first adjustment means further comprise at least one sixth chamber fluidically connected to said fifth chamber, wherein said at least one sixth chamber and said at least one fifth chamber contain an incompressible fluid transferable by said first adjustment means between said at least one fifth chamber and said sixth chamber, and vice versa. According to the invention, said at least one second dividing wall is also sliding or deformable depending on the volume of incompressible fluid transferred from said at least one fifth chamber to said at least one sixth chamber, and vice versa.

According to the invention, said gas spring also comprises a further chamber arranged between said third chamber and said fourth chamber and at least one further dividing wall to separate said further chamber from said fourth chamber; said gas spring also comprises at least one elastic spring having a first end resting on said first dividing wall and a second end resting on said further dividing wall.

According to a preferred embodiment of the invention, no matter which of the examples described above, the damper comprises one or more passages, preferably made on the piston, for fluidically connecting one to another said first chamber to said second chamber, and vice versa. This way, such shock absorber is of the double-acting type since there is a fluidic displacement between the first chamber and the second chamber of the cylinder during the displacement of the piston inside the cylinder.

Still, the aforementioned one or more transfer ducts comprise at least one first duct for fluidically connecting one to another said fourth chamber to said second chamber, and vice versa.

In alternative to or in combination with the embodiment described above, said one or more transfer ducts comprise at least one second duct for fluidically connecting one to another said fourth chamber to said first chamber.

According to a preferred embodiment of the invention, the fluidic damper comprises a shutter arranged within said housing of said rod and movable between a first position, for closing said at least one first duct, and a second position, for opening said at least one first duct and the fluidic connection between said fourth chamber and said second chamber, and vice versa.

According to a preferred embodiment of the invention, said first means comprise an actuator for fluidically connecting said sixth chamber to said fifth chamber and to said fourth chamber, and at least one valve for distributing said incompressible fluid between said fifth chamber and said fourth chamber.

In alternative to the embodiments described above, said shock absorber comprises second means for adjusting the pressure of the incompressible fluid of said at least one first chamber and/or said at least one second chamber.

Finally, the shock absorber comprises an elastic element functionally combined in series with said fluidic damper.

Preferably, said at least one elastic element can be housed within the third chamber, thus further reducing the volume of the shock absorber with respect to those of the known art.

### BRIEF DESCRIPTION OF THE DRAWINGS

Several non-claimed examples will now be described by way of example only and without limitations with reference to the accompanying figures, in which:
figure 1A is a schematic view of a first non-claimed example of the shock absorber in a first position;
figure 1B is a schematic view of the non-claimed example of figure 1A in a second position of the piston with respect to the cylinder of the damper;
figure 1C is a schematic view of the non-claimed example of figure 1A in a different position of the dividing wall of the gas spring present inside the housing of the rod of the damper;
figure 2A is a schematic view of a second non-claimed example of the shock absorber in a first position;
figure 2B is a schematic view of the second non-claimed example of figure 2A in a second position of the second dividing wall of the gas spring;
figure 3 is a schematic view of a shock absorber according to a third non-claimed example;
figure 4 is a schematic view of a shock absorber according to a fourth non-claimed example;
figure 5A is a schematic view of a fifth non-claimed example of the shock absorber in a first position;
figure 5B is a schematic view of the non-claimed example of figure 5A in a second position between the wheel and the frame of the vehicle;
figure 6A is a schematic view of a further non-claimed example of the shock absorber in a first position;
figure 6B is a schematic view of the non-claimed example of figure 6A in a second position of the shutter of the fluidic damper;

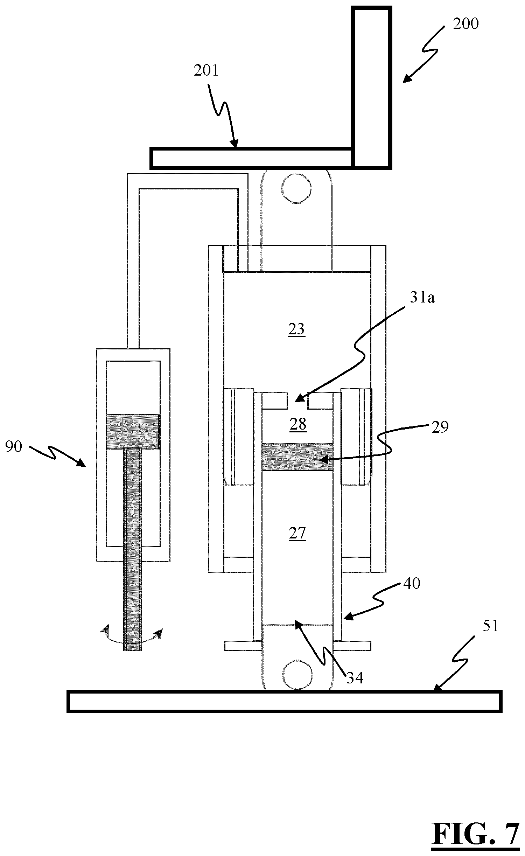

figure 7 shows a schematic view of a further non-claimed example of the shock absorber used for the seat of a vehicle, preferably of a ship.

### DETAILED DESCRIPTION OF an embodiment according to the invention and SOME NON-CLAIMED EXAMPLES

A non-illustrated embodiment according to the invention relates to a shock absorber 1 for a wheeled vehicle or for a seat of a vehicle. The shock absorber comprises at least one fluidic damper which is constrainable between at least one wheel or the seating of the seat and the frame of the vehicle. The shock absorber is equipped with a cylinder and a piston sliding within the cylinder as well as at least one gas spring which is functionally combined with the at least one fluidic damper and acting for at least part of the stroke of said piston with respect to said cylinder. The cylinder comprises a first chamber and a second chamber. The piston slides within the cylinder thus varying the dimensions of the first chamber and the second chamber. The fluidic damper further comprises a rod which is integrally combined with the piston and adapted to make said piston slide inside the cylinder. The rod is equipped with an inner housing in which the at least one gas spring is housed, wherein the gas spring is functionally combined with the at least one second chamber and/or the at least one first chamber of the cylinder. The at least one gas spring comprises at least one third chamber and at least one fourth chamber. The at least one third chamber contains a gas. The at least one third chamber and the at least one fourth chamber are separated from each other, directly or indirectly, by at least one sliding, or deformable, dividing wall. The at least one fourth chamber is in fluidic communication with said at least second chamber, wherein the at least one fourth chamber and the at least one second chamber contain an incompressible fluid which is transferable between the at least one second chamber and the at least one fourth chamber, and vice versa, as the position of the piston varies with respect to the cylinder. The at least one dividing wall is, further, sliding, or deformable, depending on the volume of incompressible fluid transferred from the at least one second chamber and the at least one fourth chamber, and vice versa, so as to vary the volume of the third chamber. The housing of the rod comprises the at least one third chamber, the at least one fourth chamber and the dividing wall. Additionally, the shock absorber comprises first adjustment means to adjust the pressure of the gas inside the at least one third chamber. The housing comprises a hole obtained within the rod. The gas spring comprises a fifth chamber and at least one second dividing wall to separate the at least one third chamber from the at least fifth chamber. The second dividing wall is sliding, or deformable, so as to vary the volume of the third chamber and the fifth chamber. The fifth chamber and the second dividing wall are arranged within the hole. The first adjustment means further comprise at least one sixth chamber which is fluidically connected to the fifth chamber, wherein the at least one sixth chamber and said at least one fifth chamber contain an incompressible fluid. The incompressible fluid is transferred by the first adjustment means between the at least one fifth chamber and the sixth chamber, and vice versa. The at least one second dividing wall is further sliding or deformable, depending on the volume of incompressible fluid transferred from the at least one fifth chamber to the at least one sixth chamber, and vice versa. Furthermore the gas spring also comprises a further chamber arranged between the third chamber and the fourth chamber as well as at least one further dividing wall to separate the further chamber from the fourth chamber. The gas spring also comprises at least one elastic spring having a first end resting on said first dividing wall and a second end resting on the further dividing wall.

With particular reference to such figures, 1 denotes a shock absorber according to a non-claimed example.

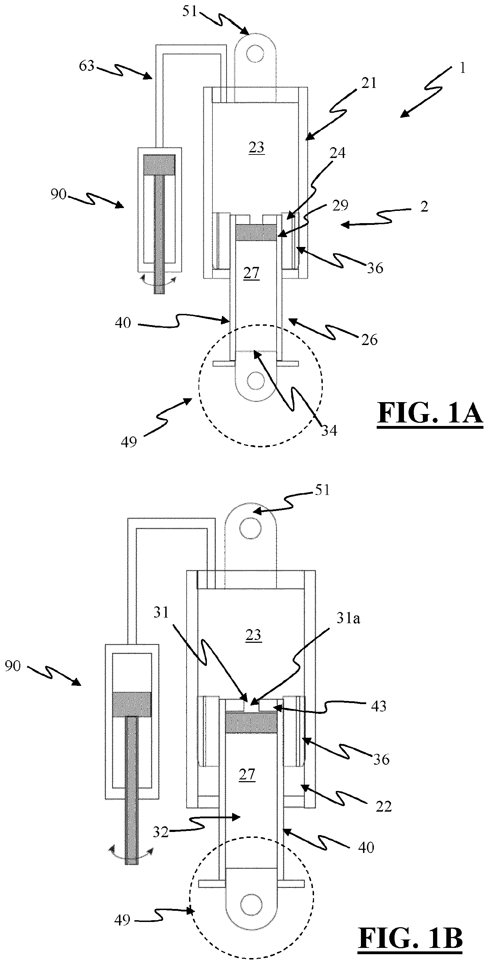

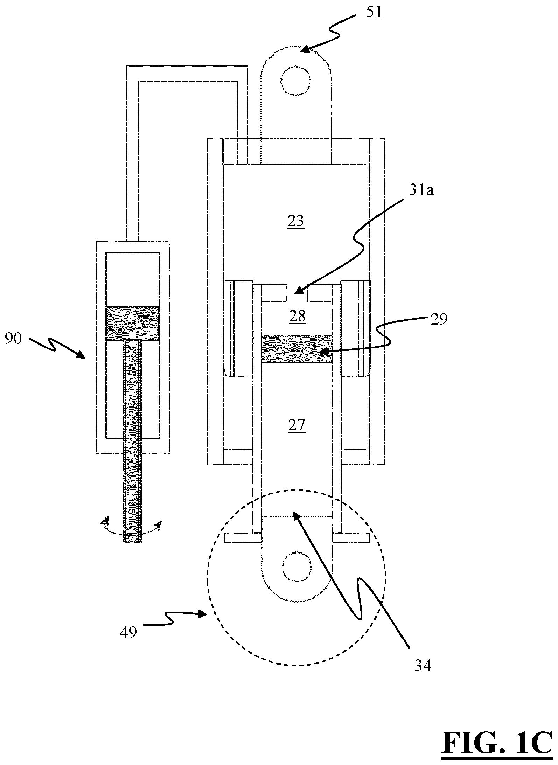

With reference to figures 1A and 1B, the shock absorber 1 for a wheeled vehicle comprises at least one fluidic damper 2 constrained between at least one wheel 49 and the frame 51 of a vehicle, preferably two-wheeled, and equipped with a cylinder 21 and a piston 24 sliding within the cylinder 21, and a gas spring 26 functionally combined with the fluidic damper 2 and acting for at least part of the stroke of the piston 24 with respect to the cylinder 21. The cylinder 21 comprises a first chamber 22 and a second chamber 23 and the piston 24 slides within the cylinder 21 thus varying the dimensions of the first chamber 22 and the second chamber 23. Always as shown in figures 1A and 1B, the fluidic damper 2 comprises a rod 40 integrally combined with the piston 24 and adapted to make the piston 24 slide inside the cylinder 21. During the sliding of the piston 24, following its displacement, the incompressible liquid, for example oil contained inside the first chamber 22 and the second chamber 23, is transferred from the first chamber 22 to the second chamber 23, and vice versa. Advantageously, the rod 40 is equipped with an inner housing 32 which in turn comprises the same gas spring 26. Such gas spring 26 is functionally connected to the first chamber 22 and the second chamber 23 of the cylinder 21. In practice, the term "functionally" herein and hereunder means that any displacement of incompressible fluid, such as for example oil, between the first chamber 22 and the second chamber 23 allows to activate the operation of the gas spring 26, thus generating an elastic response of the gas spring 26, thus obtaining a compression or expansion of the gas present in the same gas spring 26 (also see figure 1C).

According to the non-claimed example shown in figure 1A, the gas spring 26 comprises a third chamber 27 and a fourth chamber 28. The third chamber 27 contains a gas such as, for example, air, whereas the fourth chamber 28 contains an incompressible fluid such as, for example, oil. The third chamber 27 and the fourth chamber 28 are separated from each other by a dividing wall 29 that is sliding or deformable in other non-claimed examples not shown herein. A limit stop 43 able to impede the displacement of the dividing wall 29, and thus its coming out, is also present inside the fourth chamber 28. Such limit stop 43 can be positioned along the inner housing 32 in any position depending on the type of operation to be provided to the gas spring 26.

Moreover, the fourth chamber 28 is in fluidic communication with the second chamber 23 by means of a transfer duct 31. Such second chamber 23 is in turn in fluidic communication with the first chamber 22. In particular, the fourth chamber 28 and the second chamber 23 contain an incompressible fluid transferable between the second chamber 23 and the fourth chamber 28, and vice versa, according to the variation of the position of the piston 24 with respect to the cylinder 21. Thus, this also involves a transfer of the incompressible fluid between the first chamber 22 and the second chamber 23. Such transfer duct 31 comprises a first transfer duct 31a. Furthermore, the dividing wall 29 in turn is able to slide depending on the volume of the incompressible fluid transferred from the second chamber 23 to the fourth chamber 28 and vice versa, so as to vary the volume of the third chamber 27 and the fourth chamber 28. This way, the gas present inside the chamber 27 acts as a real spring, thus being compressed or expanded depending on the volume of incompressible fluid that reaches the fourth chamber 28. Still, the housing 32 of the rod 40 comprises the third chamber 27, the fourth chamber 28 and the dividing wall 29.

According to the non-claimed example shown in figure 1A, the first chamber 22 of the cylinder 21 is fluidically connected to the second chamber 23 by means of a couple of fluidic passages 36. This way, the second chamber 23, the first chamber 22 and the fourth chamber 28 are all fluidically connected to each other.

Always according to the non-claimed example described herein, the housing 32 comprises a hole 34 formed within the rod 40.

The same non-claimed example shown in figure 1A is shown in figures 1B and 1C, however, the gradual reduction of the distance between the frame 40 and the wheel 49 of the vehicle, with consequent displacement of the dividing wall 29 and compression of the gas (in the particular case of air) present inside the third chamber 27, occurs in such images.

Thus, the advantage of this non-claimed example is that a volume smaller than that of the shock absorber of known art is simply obtained since the gas spring 26 is placed inside the rod 40 which moves the piston 24 of the fluidic damper 2. The pressure of the gas inside the third chamber 27 can be obtained by means of first adjustment means 50 (not depicted in this non-claimed example).

Such first adjustment means 50 comprise a valve (not shown) arranged at the wall of the rod 40 and open only whenever there is a necessity to introduce or collect the fluid, preferably air, into/from the inside of the third chamber 27.

In the non-claimed example described herein, the shock absorber 1 also comprises second adjustment means 90 to adjust the volume of incompressible liquid of the first chamber 22 and, consequently, of the second chamber 23.

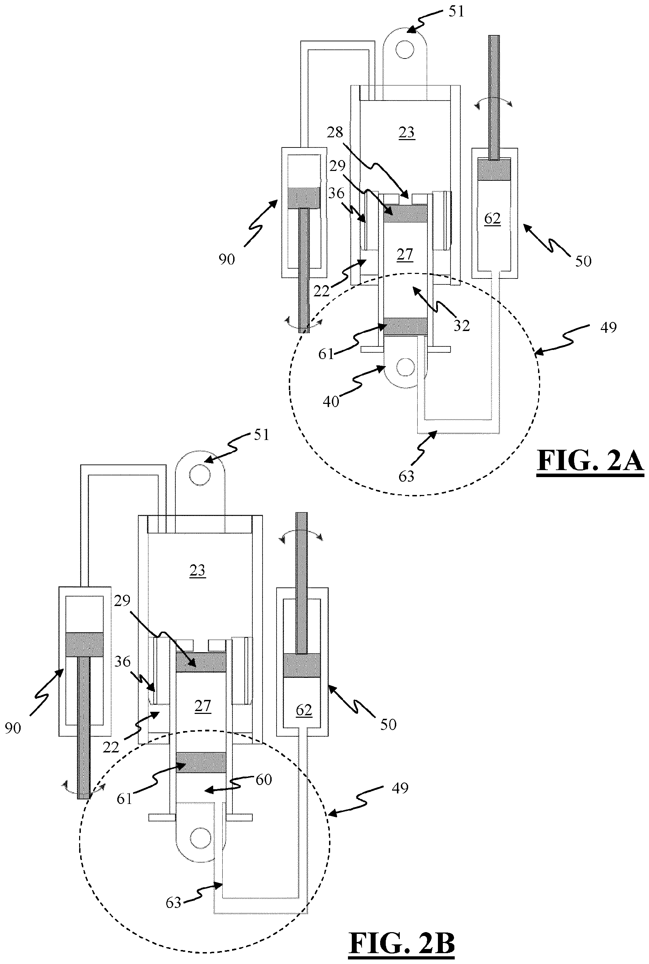

In the non-claimed example shown in figures 2A and 2B, the gas spring 26, with respect to the non-claimed example described above, also comprises a fifth chamber 60 and a second dividing wall 61 to separate the third chamber 27 from the fifth chamber 60. Such dividing wall 61 is sliding or, in other embodiments not shown herein, deformable, so as to vary the volume of the third chamber 27 and of the fifth chamber 60. Both the fifth chamber 60 and the second dividing wall 61 are arranged within the housing hole 34. Such housing hole 34 is the housing 32 inside the rod 40. In this case, the shock absorber 1 comprises first adjustment means 50 to adjust the pressure of the gas inside the third chamber 27. Such first adjustment means 50 comprise a sixth chamber 62 fluidically connected to the fifth chamber 60 by means of the connection duct 63. The sixth chamber 62 and the fifth chamber 60 contain an incompressible fluid, such as oil, transferable by the first adjustment means 50 between the fifth chamber 60 and the sixth chamber 62 and vice versa. The second dividing wall 61 is further sliding or deformable, depending on the volume of incompressible fluid transferred from the fifth chamber 60 to the sixth chamber 62, and vice versa. Such non-claimed example, compared to the one described in figures 1A, 1B and 1C, allows an improved adjustability of the pressure of the gas contained inside the third chamber 27.

In both the first non-claimed example and second non-claimed example described above, the shock absorber 1 can comprise second adjustment means 90 to adjust the pressure of the incompressible fluid present in the first chamber 22 and the second chamber 23. Such adjustment means 90 allow to consequently also vary the volume of the fourth chamber 28 of the gas spring 26. This occurs independently of the first adjustment means 50.

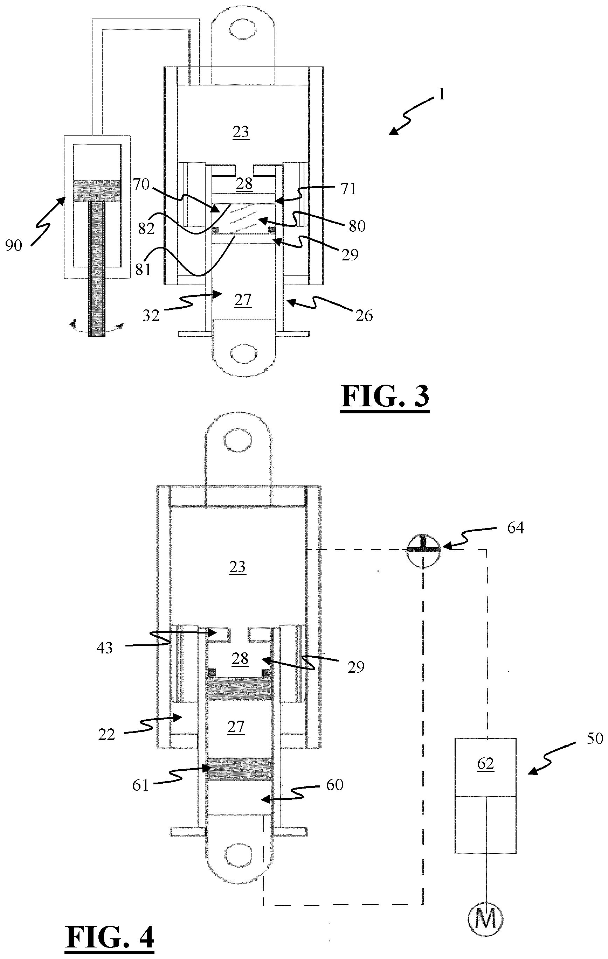

According to a further non-claimed example shown in figure 3, in part similar to the non-claimed example described in figure 1A, the gas spring 26, always contained inside the housing 32, comprises a further chamber 70 arranged between the third chamber 27 and the fourth chamber 28 and a further dividing wall 71 to separate the further chamber 70 from the fourth chamber 28. The gas spring 26 further comprises an elastic spring 80 having a first end 81 resting on the first dividing wall 29 and a second end 82 resting on the further dividing wall 71. Such solution thus allows to eliminate the coil spring normally placed outside and coaxially to the fluidic damper 2, thus making the structure of the entire shock absorber 1 even more compact.

The non-claimed example shown in figure 4 is rather similar to the non-claimed example shown in figures 2A and 2B.

In this case, the first adjustment means 50 comprise an actuator for fluidically connecting the sixth chamber 62 to the fifth chamber 60 and to the second chamber 23, and a three-way valve 64 for distributing the incompressible fluid between the fifth chamber 60 and the second chamber 23 and, thus also to the fourth chamber 28.

Thus, in this case, it is possible to adjust the volume of the second chamber 23 and, thus, of the fourth chamber 28 and the first chamber 22 of the cylinder 21 by using a single actuator. In this case, there is a close dependence between the adjustment of the volume of the fourth chamber 28 and the fifth chamber 60, also obtainable without using the aforementioned second adjustment means 90.

Finally, in the various non-claimed examples described above, the shock absorber 1 comprises an elastic element (not shown herein in figure but known to the technician of the field) functionally combined in series with the fluidic damper 2. Such elastic element is not necessary in the case of the non-claimed example of figure 3, where such elastic element 80 is inside the gas spring 26.

Such elastic element can also be arranged within the third chamber 27 of the gas spring 26.

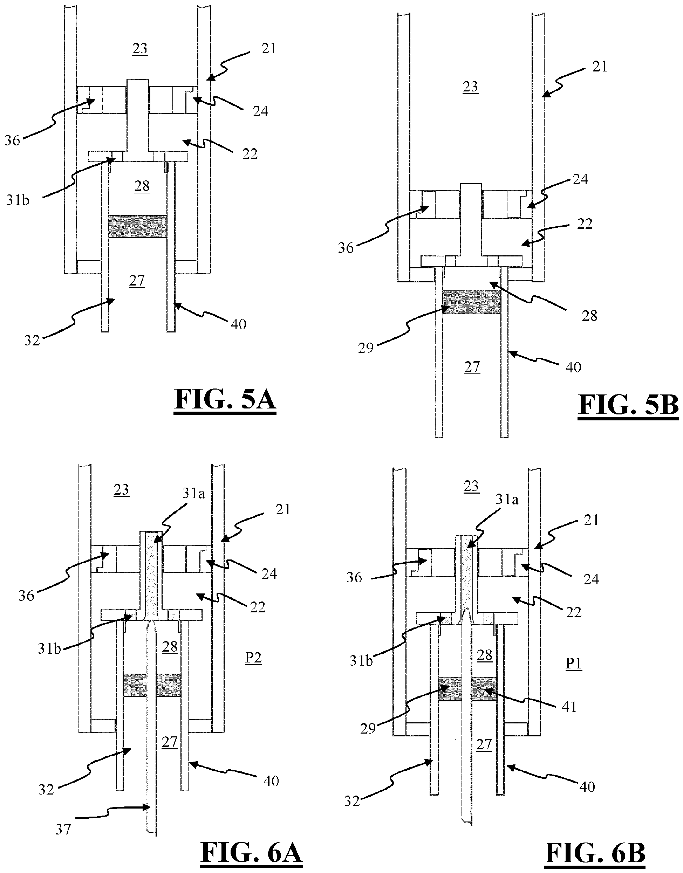

A further schematic non-claimed example of the shock absorber 1, with particular attention to the coupling area between the piston 24 and cylinder 21, is shown in figures 5A and 5B. In this embodiment, as in the previous ones, the piston 24 comprises two passages 36 for fluidically connecting the first chamber 22 and the second chamber 23 to each other, and vice versa. Instead, unlike in the non-claimed example described above, where the fourth chamber 28 is always connected directly to the second chamber 23 of the cylinder, in such embodiment the transfer ducts 31 comprise two second ducts 3 1b for transferring the incompressible fluid from the fourth chamber 28 to the first chamber 22. In this non-claimed example, the incompressible fluid cannot thus pass directly from the fourth chamber 28 to the second chamber 23.

In the non-claimed example described in figures 6A and 6B, the transfer ducts 31 comprise a first duct 31a for fluidically connecting the fourth chamber 28 to the second chamber 23, and vice versa. In this non-claimed example, the fluidic damper 2 comprises a shutter 37 arranged within the housing 32 and movable in a translatable way between a first position P1, for closing the first duct 31a (figure 6B), and a second position P2 for opening the first duct 31a (figure 6A) and the direct fluidic connection between the fourth chamber 28 and the second chamber 23, and vice versa.

Depending on how tightened the shutter 37 is tightened within the passage 31a, the flow of incompressible fluid through the fourth chamber 28 and the second chamber 23 will increase or decrease.

Such shutter 37 is arranged along the longitudinal axis X of the housing 32 of the rod 40, passing through a through hole 41 formed on the dividing wall 29. Gaskets are positioned at such through hole 41, in a known way, so as to avoid the coming out of the gas contained inside the third chamber 27. Such shutter 37 is operated from the outside or manually by the user or is electronically controlled, depending on the flow of oil needed to come out/into the fourth chamber 28 and to transfer into/out of the second chamber 23 to vary the effect on the shock absorber 1.

Moreover, although not described and shown herein, object of such invention is also a shock absorber 1 identical to the one described above but used for the seat 200 of a vehicle, wherein the fluidic damper 2 is constrained between at least the seating 201 of the seat 200 and the frame 51 of the vehicle itself. In particular, the vehicle is a ship. In this case, the parts constituting the shock absorber 1 are in practice identical to those of the shock absorber described above and used for wheeled vehicle. In the case of a shock absorber 1 used for the seat 200 of a vehicle, any time the connection of the fluidic damper 2 between the wheel and the frame of the vehicle is described in the text of the present application, it is to be replaced with the connection of the damper 2 between the seating 201 of the seat 200 and the frame 51, which is preferably a ship.

## Claims

1. Shock absorber (1) for a wheeled vehicle, or for a seat (200) of a vehicle, said shock absorber (1) comprising at least one fluidic damper (2) constrainable between at least one wheel (49), or the seating (201) of said seat (200), and the frame (51) of said vehicle and equipped with a cylinder (21) and a piston (24) sliding within said cylinder, and at least one gas spring (26) functionally combined with said at least one fluidic damper (2) and acting for at least part of the stroke of said piston with respect to said cylinder, wherein said cylinder (21) comprises a first chamber (22) and a second chamber (23) and that said piston (24) slides within said cylinder (21) thus varying the dimensions of said first chamber and said second chamber, said fluidic damper (2) further comprising a rod (40) integrally combined with said piston (24) and adapted to make said piston slide inside said cylinder (21), said rod (40) being equipped with an inner housing (32) in which said at least one gas spring is housed, and said gas spring being functionally combined with said at least one second chamber (23) and/or said at least one first chamber (22) of said cylinder (21), wherein said at least one gas spring (26) comprises at least one third chamber (27) and at least one fourth chamber (28), said at least one third chamber (27) containing a gas, wherein said at least one third chamber (27) and said at least one fourth chamber (28) are separated from each other, directly or indirectly, by at least one sliding, or deformable, dividing wall (29) and wherein said at least one fourth chamber (28) is in fluidic communication with said at least second chamber (23), said at least one fourth chamber (28) and said at least one second chamber (23) containing an incompressible fluid transferable between said at least one second chamber (23) and said at least one fourth chamber (28), and vice versa, as the position of said piston (24) varies with respect to said cylinder (21), said at least one dividing wall (29) being, further, sliding, or deformable, depending on the volume of incompressible fluid transferred from said at least one second chamber (23) and said at least one fourth chamber (28), and vice versa, so as to vary the volume of said third chamber (27), said housing of said rod comprising said at least one third chamber (27), said at least one fourth chamber (28) and said dividing wall (29), and wherein said shock absorber (1) comprises first adjustment means (50) to adjust the pressure of said gas inside said at least one third chamber (27), said housing (32) comprising a hole (34) obtained within said rod (40), and said gas spring comprising a fifth chamber (60) and at least one second dividing wall (61) to separate said at least one third chamber (27) from said at least fifth chamber (60), said second dividing wall (61) being sliding, or deformable, so as to vary the volume of said third chamber (27) and said fifth chamber (60), said fifth chamber (60) and said second dividing wall (61) being arranged within said hole (34), **characterized in that** said first adjustment means (50) further comprise at least one sixth chamber (62) fluidically connected to said fifth chamber (60), said at least one sixth chamber (62) and said at least one fifth chamber (60) containing an incompressible fluid, said incompressible fluid being transferred by said first adjustment means (50) between said at least one fifth chamber (60) and said sixth chamber (62), and vice versa, said at least one second dividing wall (61) being further sliding or deformable, depending on the volume of incompressible fluid transferred from said at least one fifth chamber to said at least one sixth chamber, and vice versa, and **in that** said gas spring also comprises a further chamber (70) arranged between said third chamber (27) and said fourth chamber (28) and at least one further dividing wall (71) to separate said further chamber (70) from said fourth chamber (28), said gas spring also comprising at least one elastic spring (80) having a first end (81) resting on said first dividing wall (29) and a second end (82) resting on said further dividing wall (71).

2. Shock absorber (1) according to claim 1, **characterized in that** said shock absorber comprises one or more fluid transfer ducts (31, 31a, 31b) made at least in part within said rod (40) and/or said piston (24) and/or said cylinder (21) to functionally connect said gas spring (26) to said at least one second chamber (23) and/or said at least one first chamber of said cylinder (21), preferably said one or more fluid connections (31) connect said at least one fourth chamber (28) of said gas spring (26) to said at least one second chamber (23) and/or to said at least one first chamber of said cylinder (21).

3. Shock absorber (1) according to one or more of claims 1 to 2, **characterized in that** said first means (50) comprise an actuator for fluidically connecting said sixth chamber (62) to said fifth chamber (60) and to said fourth chamber (28) and/or said second chamber (23), and at least one valve (64) for distributing said incompressible fluid between said fifth chamber (60) and said fourth chamber (28) and/or said second chamber (23).

4. Shock absorber according to one or more of claims 1 to 3, **characterized in that** said at least one piston (24) comprises one or more passages (36) for fluidically connecting to each other said first chamber (22) to said second chamber (23), and vice versa.

5. Shock absorber according to one or more of claims 2 to 4, **characterized in that** said one or more transfer ducts (31) comprise at least one first duct (31a) for transferring said fluid from said fourth chamber (28) to said second chamber (23).

6. Shock absorber according to one or more of claims 2 to 5, **characterized in that** said one or more transfer ducts (31) comprise at least one second duct (31b) for fluidically connecting said fourth chamber (28) to said first chamber (22), and vice versa.

7. Shock absorber according to claim 6, **characterized in that** said fluidic damper comprises a shutter (37) arranged within said housing (32) and movable between a first position (P1), for closing said at least one first duct (31a), and a second position (P2) for opening said at least first duct (31a) and the fluidic connection between said fourth chamber and said second chamber, and vice versa.

8. Shock absorber (1) according to one or more of claims 1 to 7, **characterized in that** said shock absorber comprises second means (90) for adjusting the volume of said at least one first chamber (22) and/or of said at least one second chamber (23).

9. Shock absorber (1) according to one or more of claims 1 to 8, **characterized by** comprising an elastic element functionally combined in series with said fluidic damper.

## Patentansprüche

1. Stoßdämpfer (1) für ein Radfahrzeug oder einen Sitz (200) eines Fahrzeugs, wobei der Stoßdämpfer (1) mindestens einen Fluiddämpfer (2) aufweist, der zwischen mindestens einem Rad (49) oder der Sitzfläche (201) des Sitzes (200) und dem Rahmen (51) des Fahrzeugs befestigt werden kann und mit einem Zylinder (21) und einem in dem Zylinder gleitenden Kolben (24) ausgestattet ist, und mindestens eine Gasfeder (26) aufweist, die funktionell mit dem mindestens einen Fluiddämpfer (2) verbunden ist und für mindestens einen Teil des Hubs des Kolbens in Bezug auf den Zylinder wirkt, wobei der Zylinder (21) eine erste Kammer (22) und eine zweite Kammer (23) umfasst und der Kolben (24) in dem Zylinder (21) gleitet, wodurch die Abmessungen der ersten Kammer und der zweiten Kammer verändert, wobei der Fluiddämpfer (2) außerdem eine Stange (40) umfasst, die integral mit dem Kolben (24) verbunden ist und dazu geeignet ist, den Kolben in dem Zylinder (21) gleiten zu lassen, wobei die Stange (40) mit einem Innengehäuse (32) ausgestattet ist, in dem die mindestens eine Gasfeder untergebracht ist, und die Gasfeder funktionell mit der mindestens einen zweiten Kammer (23) und/oder der mindestens einen ersten Kammer (22) des Zylinders (21) kombiniert ist, wobei die mindestens eine Gasfeder (26) mindestens eine dritte Kammer (27) und mindestens eine vierte Kammer (28) umfasst, wobei die mindestens eine dritte Kammer (27) ein Gas enthält, wobei die mindestens eine dritte Kammer (27) und die mindestens eine vierte Kammer (28) direkt oder indirekt durch mindestens eine verschiebbare oder verformbare Trennwand (29) voneinander getrennt sind und wobei die mindestens eine vierte Kammer (28) in Fluidverbindung mit der mindestens einen zweiten Kammer (23) steht, wobei die mindestens eine vierte Kammer (28) und die mindestens eine zweite Kammer (23) ein inkompressibles Fluid enthalten, das zwischen der mindestens einen zweiten Kammer (23) und der mindestens einen vierten Kammer (28) und umgekehrt übertragbar ist, wenn sich die Position des Kolbens (24) in Bezug auf den Zylinder (21) ändert, wobei die mindestens eine Trennwand (29) außerdem verschiebbar oder verformbar ist, abhängig von dem Volumen des inkompressiblen Fluids, das von der mindestens einen zweiten Kammer (23) und der mindestens einen vierten Kammer (28) und umgekehrt übertragen wird, um das Volumen der dritten Kammer (27) zu variieren, wobei das Gehäuse der Stange die mindestens eine dritte Kammer (27), die mindestens eine vierte Kammer (28) und die Trennwand (29) umfasst, und wobei der Stoßdämpfer (1) erste Einstellmittel (50) zum Einstellen des Drucks des Gases innerhalb der mindestens einen dritten Kammer (27) umfasst, wobei das das Gehäuse (32) ein Loch (34) aufweist, das innerhalb der Stange (40) ausgebildet ist, und die die Gasfeder eine fünfte Kammer (60) und mindestens eine zweite Trennwand (61) umfasst, um die mindestens eine dritte Kammer (27) von der mindestens fünften Kammer (60) zu trennen, wobei die zweite Trennwand (61) verschiebbar oder verformbar ist, um das Volumen der dritten Kammer (27) und der fünften Kammer (60) zu variieren, wobei die fünfte Kammer (60) und die zweite Trennwand (61) innerhalb des Lochs (34) angeordnet sind, **dadurch gekennzeichnet, dass** die ersten Einstellmittel (50) außerdem mindestens eine sechste Kammer (62) umfassen, die fluidisch mit der fünften Kammer (60) verbunden ist, wobei die mindestens eine sechste Kammer (62) und die mindestens eine fünfte Kammer (60) ein inkompressibles Fluid enthalten, wobei das inkompressible Fluid durch die ersten Einstellmittel (50) zwischen der mindestens einen fünften Kammer (60) und der sechsten Kammer (62) und umgekehrt übertragen wird, wobei die mindestens eine zweite Trennwand (61) außerdem verschiebbar oder verformbar ist, abhängig von dem Volumen des inkompressiblen Fluids, das von der mindestens einen fünften Kammer in die mindestens eine sechste Kammer und umgekehrt übertragen wird, und dadurch dass, die Gasfeder überdies eine weitere Kammer (70) umfasst, die zwischen der dritten Kammer (27) und der vierten Kammer (28) angeordnet ist, und mindestens eine weitere Trennwand (71), um die weitere Kammer (70) von der vierten Kammer (28) zu trennen, wobei die Gasfeder überdies mindestens eine elastische Feder (80) umfasst, deren erstes Ende (81) auf der ersten Trennwand (29) aufliegt und deren zweites Ende (82) auf der weiteren Trennwand (71) aufliegt.

2. Stoßdämpfer (1) nach Anspruch 1, **dadurch gekennzeichnet, dass** der Stoßdämpfer einen oder mehrere Fluidübertragungskanäle (31, 31a, 31b) umfasst, die zumindest teilweise innerhalb der Stange (40) und/oder des Kolbens (24) und/oder des Zylinders (21) ausgebildet sind, um die Gasfeder (26) funktionell mit der mindestens einen zweiten Kammer (23) und/oder der mindestens einen ersten Kammer des Zylinders (21) zu verbinden, wobei vorzugsweise die eine oder mehreren Fluidverbindungen (31) die mindestens eine vierte Kammer (28) der Gasfeder (26) mit der mindestens einen zweiten Kammer (23) und/oder mit der mindestens einen ersten Kammer des Zylinders (21) verbinden.

3. Stoßdämpfer (1) nach einem oder mehreren der Ansprüche 1 bis 2, **dadurch gekennzeichnet, dass** die ersten Mittel (50) einen Aktuator zum fluidischen Verbinden der sechsten Kammer (62) mit der fünften Kammer (60) und mit der vierten Kammer (28) und/oder der zweiten Kammer (23) und mindestens ein Ventil (64) zum Verteilen des inkompressiblen Fluids zwischen der fünften Kammer (60) und der vierten Kammer (28) und/oder der zweiten Kammer (23) umfassen.

4. Stoßdämpfer nach einem oder mehreren der Ansprüche 1 bis 3, **dadurch gekennzeichnet, dass** der mindestens eine Kolben (24) einen oder mehrere Durchgänge (36) zum fluidischen Verbinden der ersten Kammer (22) mit der zweiten Kammer (23) und umgekehrt aufweist.

5. Stoßdämpfer nach einem oder mehreren der Ansprüche 2 bis 4, **dadurch gekennzeichnet, dass** die eine oder mehreren Übertragungskanäle (31) mindestens einen ersten Kanal (31a) zum Übertragen des Fluids von der vierten Kammer (28) zur zweiten Kammer (23) umfassen.

6. Stoßdämpfer nach einem oder mehreren der Ansprüche 2 bis 5, **dadurch gekennzeichnet, dass** die ein oder mehreren Übertragungskanäle (31) mindestens einen zweiten Kanal (31b) zum fluidischen Verbinden der vierten Kammer (28) mit der ersten Kammer (22) und umgekehrt umfassen.

7. Stoßdämpfer nach Anspruch 6, **dadurch gekennzeichnet, dass** der Fluiddämpfer einen Verschluss (37) aufweist, der innerhalb des Gehäuses (32) angeordnet und zwischen einer ersten Position (P1) zum Schließen des mindestens einen ersten Kanals (31a) und einer zweiten Position (P2) zum Öffnen des mindestens ersten Kanals (31a) und der Fluidverbindung zwischen der vierten Kammer und der zweiten Kammer und umgekehrt beweglich ist.

8. Stoßdämpfer (1) nach einem oder mehreren der Ansprüche 1 bis 7, **dadurch gekennzeichnet, dass** der Stoßdämpfer zweite Mittel (90) zum Einstellen des Volumens der mindestens einen ersten Kammer (22) und/oder der mindestens einen zweiten Kammer (23) aufweist.

9. Stoßdämpfer (1) nach einem oder mehreren der Ansprüche 1 bis 8, **dadurch gekennzeichnet, dass** er ein elastisches Element aufweist, das funktionell in Reihe mit dem Fluiddämpfer gekoppelt ist.

## Revendications

1. Amortisseur (1) pour un véhicule à roues, ou pour un siège (200) d'un véhicule, ledit amortisseur (1) comprenant au moins un amortissement fluidique (2) contraignable entre au moins une roue (49), ou l'assise (201) dudit siège (200), et le châssis (51) dudit véhicule et équipé d'un cylindre (21) et d'un piston (24) coulissant dans ledit cylindre, et d'au moins un ressort à gaz (26) fonctionnellement combiné avec ledit au moins un amortissement fluidique (2) et agissant pour au moins une partie de la course dudit piston par rapport audit cylindre, dans lequel ledit cylindre (21) comprend une première chambre (22) et une deuxième chambre (23) et que ledit piston (24) coulisse à l'intérieur dudit cylindre (21), faisant ainsi varier les dimensions de ladite première chambre et de ladite deuxième chambre, ledit amortissement fluidique (2) comprenant en outre une tige (40) combinée intégralement avec ledit piston (24) et adaptée pour faire glisser ledit piston à l'intérieur dudit cylindre (21), ladite tige (40) étant équipée d'un logement intérieur (32) dans lequel ledit au moins un ressort à gaz est logé, et ledit ressort à gaz étant fonctionnellement combiné avec ladite au moins une deuxième chambre (23) et/ou ladite au moins une première chambre (22) dudit cylindre (21), dans lequel ledit au moins un ressort à gaz (26) comprend au moins une troisième chambre (27) et au moins une quatrième chambre (28), ladite au moins une troisième chambre (27) contenant un gaz, dans lequel ladite au moins une troisième chambre (27) et ladite au moins une quatrième chambre (28) sont séparées l'une de l'autre, directement ou indirectement, par au moins une paroi de séparation (29) coulissante ou déformable, et dans lequel ladite au moins une quatrième chambre (28) est en communication fluidique avec ladite au moins deuxième chambre (23), ladite au moins une quatrième chambre (28) et ladite au moins une deuxième chambre (23) contenant un fluide incompressible transférable entre ladite au moins une deuxième chambre (23) et ladite au moins une quatrième chambre (28), et vice versa, lorsque la position dudit piston (24) varie par rapport audit cylindre (21), ladite au moins une paroi de séparation (29) étant, en outre, coulissante, ou déformable, en fonction du volume de fluide incompressible transféré de ladite au moins une deuxième chambre (23) et de ladite au moins une quatrième chambre (28), et vice versa, de manière à faire varier le volume de ladite troisième chambre (27), ledit logement de ladite tige comprenant ladite au moins une troisième chambre (27), ladite au moins une quatrième chambre (28) et ladite paroi de séparation (29), et dans lequel ledit amortisseur (1) comprend des premiers moyens de réglage (50) pour ajuster la pression dudit gaz à l'intérieur de ladite au moins une troisième chambre (27), ledit logement (32) comprenant un trou (34) obtenu à l'intérieur de ladite tige (40), et ledit ressort à gaz comprenant une cinquième chambre (60) et au moins une deuxième paroi de séparation (61) pour séparer ladite au moins une troisième chambre (27) de ladite au moins cinquième chambre (60), ladite deuxième paroi de séparation (61) étant coulissante, ou déformable, de manière à faire varier le volume de ladite troisième chambre (27) et de ladite cinquième chambre (60), ladite cinquième chambre (60) et ladite deuxième paroi de séparation (61) étant agencées à l'intérieur dudit trou (34), **caractérisé en ce que** lesdits premiers moyens de réglage (50) comprennent en outre au moins une sixième chambre (62) reliée fluidiquement à ladite cinquième chambre (60), ladite au moins une sixième chambre (62) et ladite au moins une cinquième chambre (60) contenant un fluide incompressible, ledit fluide incompressible étant transféré par lesdits premiers moyens de réglage (50) entre ladite au moins une cinquième chambre (60) et ladite sixième chambre (62), et vice versa, ladite au moins une deuxième paroi de séparation (61) étant en outre coulissante ou déformable, en fonction du volume de fluide incompressible transféré de ladite au moins une cinquième chambre à ladite au moins une sixième chambre, et vice versa, et **en ce que** ledit ressort à gaz comprend également une autre chambre (70) disposée entre ladite troisième chambre (27) et ladite quatrième chambre (28) et au moins une autre paroi de séparation (71) pour séparer ladite autre chambre (70) de ladite quatrième chambre (28), ledit ressort à gaz comprend également au moins un ressort élastique (80) ayant une première extrémité (81) reposant sur ladite première paroi de séparation (29) et une deuxième extrémité (82) reposant sur ladite autre paroi de séparation (71).

2. Amortisseur (1) selon la revendication 1, **caractérisé en ce que** ledit amortisseur comprend un ou plusieurs conduits de transfert de fluide (31, 31a, 31b) réalisés au moins en partie à l'intérieur de ladite tige (40) et/ou dudit piston (24) et/ou dudit cylindre (21) pour relier fonctionnellement ledit ressort à gaz (26) à ladite au moins une deuxième chambre (23) et/ou ladite au moins une première chambre dudit cylindre (21), de préférence, une ou plusieurs connexions fluidiques (31) relient ladite au moins une quatrième chambre (28) dudit ressort à gaz (26) à ladite au moins une deuxième chambre (23) et/ou à ladite au moins une première chambre dudit cylindre (21).

3. Amortisseur (1) selon une ou plusieurs des revendications 1 à 2, **caractérisé en ce que** lesdits premiers moyens (50) comprennent un actionneur pour relier fluidiquement ladite sixième chambre (62) à ladite cinquième chambre (60) et à ladite quatrième chambre (28) et/ou ladite deuxième chambre (23), et au moins une soupape (64) pour distribuer ledit fluide incompressible entre ladite cinquième chambre (60) et ladite quatrième chambre (28) et/ou ladite deuxième chambre (23).

4. Amortisseur selon l'une ou plusieurs des revendications 1 à 3, **caractérisé en ce que** ledit au moins un piston (24) comprend un ou plusieurs passages (36) pour relier fluidiquement entre eux ladite première chambre (22) à ladite deuxième chambre (23), et vice versa.

5. Amortisseur selon l'une ou plusieurs des revendications 2 à 4, **caractérisé en ce que** lesdits un ou plusieurs conduits de transfert (31) comprennent au moins un premier conduit (31a) pour transférer ledit fluide de ladite quatrième chambre (28) à ladite deuxième chambre (23).

6. Amortisseur selon l'une ou plusieurs des revendications 2 à 5, **caractérisé en ce que** ledit ou lesdits conduits de transfert (31) comprennent au moins un second conduit (31b) pour relier fluidiquement ladite quatrième chambre (28) à ladite première chambre (22), et vice versa.

7. Amortisseur selon la revendication 6, **caractérisé en ce que** ledit amortissement fluidique comprend un volet (37) disposé à l'intérieur dudit logement (32) et mobile entre une première position (P1), pour fermer ledit au moins un premier conduit (31a), et une deuxième position (P2) pour ouvrir ledit au moins premier conduit (31a) et la liaison fluidique entre ladite quatrième chambre et ladite deuxième chambre, et vice versa.

8. Amortisseur (1) selon l'une ou plusieurs des revendications 1 à 7, **caractérisé en ce que** ledit amortisseur comprend des deuxièmes moyens (90) pour ajuster le volume de ladite au moins une première chambre (22) et/ou de ladite au moins une deuxième chambre (23).

9. Amortisseur (1) selon une ou plusieurs des revendications 1 à 8, **caractérisé en ce qu'**il comprend un élément élastique fonctionnellement combiné en série avec ledit amortissement fluidique.
